# NOUVEAU FASCICULE DE BREVET EUROPEEN

(11) **EP 0 406 038 B2**
(45) Date de publication et mention de la décision concernant l'opposition: **29.07.1998**
(45) Mention de la délivrance du brevet: 14.07.1993
(21) Numéro de dépôt: 90401458.6
(22) Date de dépôt: 31.05.1990
(51) Int. Cl.: B60T 8/18

(54) **Pièce d'appui pour ressort de suspension**
Stützvorrichtung für eine Radaufhängungsfeder
Suspension spring support

(30) Priorité: 28.06.1989 FR 8908608
(43) Date de publication de la demande: 02.01.1991
(73) Titulaire: Bosch Systemes de Freinage, 93700 Drancy (FR)
(72) Inventeur: Levrai, Roland, 126 rue de Stalingrad, F-93700 Drancy (FR)
(74) Mandataire: Bentz, Jean-Paul

(56) Documents cités:
- EP-A- 0 283 328
- DE-A- 3 224 295
- DE-A- 3 427 807
- DE-C- 3 120 432
- FR-A- 2 302 428
- FR-A- 2 608 540
- US-A- 2 169 629
- PATENT ABSTRACTS OF JAPAN, vol. 9, no. 73 (M-368)[1796], 3 avril 1985;& JP-A-59 202 964 (NISSAN) 16-11-1984

## Description

Cette présente invention concerne une pièce d'appui pour ressort de suspension pour véhicule automobile, faisant capteur de pression pour un correcteur de freinage à commande fluidique, la dite pièce comportant une base solidaire du dit véhicule, et une coupelle d'appui du dit ressort montée mobile à coulissement étanche sur la dite base à l'encontre de la pression régnant dans une chambre étanche coaxiale au dit ressort, ménagée entre la base et une partie solidaire de la dite coupelle, cette chambre communiquant avec une chambre de commande du dit correcteur extérieure à la dite pièce d'appui, et un moyen de guidage de la dite coupelle par rapport à la dite base étant disposé axialement au centre de la pièce.

Une telle pièce d'appui est par exemple connue du document EP-A-0 283 328.

Le dispositif de l'invention est donc destiné à coopérer avec un correcteur de freinage à commande fluidique piloté par la suspension d'un véhicule, dont il constitue le capteur de pression, un tel correcteur étant lui-même par exemple décrit dans le brevet GB-B-1 542 507.

Pour un bon fonctionnement de ces correcteurs, le capteur de pression doit être simple, fiable et facile à installer sur le véhicule.

Le capteur décrit dans le document EP-A-0 283 328 comporte une chambre annulaire de pression recevant un piston annulaire se déplaçant en fonction de l'effort perçu par la coupelle d'appui du ressort de suspension.

Bien que donnant toute satisfaction, un tel capteur est relativement coûteux à réaliser du fait de ses éléments annulaires.

Pour pallier cet inconvénient, FR-A-2 608 540 propose un dispositif intégrant un correcteur disposé entre les spires du ressort de suspension et comportant une chambre de pression fermée coaxiale au dispositif. Toutefois, ce dispositif est extrêmement complexe, donc coûteux, et, en cas de fuite du fluide enfermé dans la chambre, le correcteur se comporte de façon préjudiciable à la sécurité.

La présente invention a pour but d'obvier a ces inconvénients. Elle a donc pour objet une pièce d'appui pour ressort de suspension pour véhicule automobile, faisant capteur de pression pour un correcteur de freinage à commande fluidique, la dite pièce comportant une base solidaire du dit véhicule, et une coupelle d'appui du dit ressort montée mobile à coulissement étanche sur la dite base à l'encontre de la pression régnant dans une chambre étanche coaxiale au dit ressort, ménagée entre la base et une partie solidaire de la dite coupelle, cette chambre communiquant avec une chambre de commande du dit correcteur extérieure à la dite pièce d'appui, et un moyen guidage de la dite coupelle par rapport à la dite base étant disposé axialement au centre de la pièce.

Selon un premier mode de réalisation, le dit moyen de guidage comprend une tige coaxiale solidaire de la dite coupelle et portant un piston déterminant avec la dite base la dite chambre étanche, la dite coupelle étant soumise à la charge totale du dit ressort.

Selon un autre mode de réalisation, le dit moyen de guidage comprend une partie cylindrique solidaire de la dite base faisant saillie coaxialement de la dite base pour coopérer avec la paroi interne de la dite coupelle déterminant avec la dite base la dite chambre étanche, la dite coupelle étant soumise à la charge totale du dit ressort.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle une planche de dessins est annexée sur laquelle :

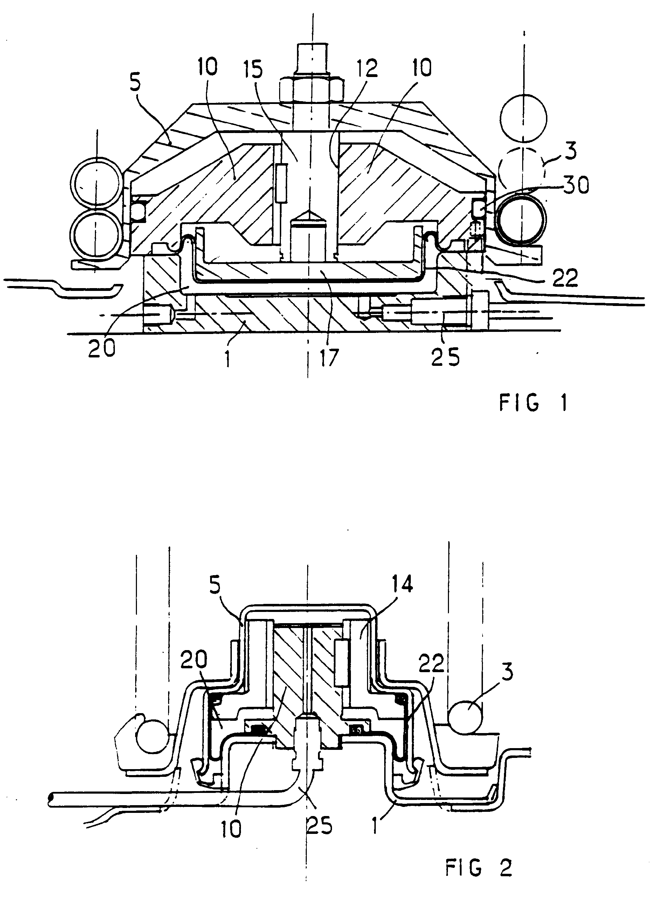

- Les Figures 1 et 2 représentent schématiquement en coupe deux modes différents de réalisation d'une pièce d'appui comformément à l'invention.

En référence maintenant aux Figures, la base 1 de la pièce d'appui représentée est solidaire par exemple du moyeu d'une roue. Le ressort de suspension 3 s'appuie sur la périphérie d'une coupelle 5. Un moyen de guidage 10 est prévu pour assurer un bon coulissement de la coupelle 5 par rapport à la base 1.

Dans l'exemple représenté Figure 1, ce moyen de guidage 10 comporte une pièce en forme d'assiette retournée solidaire de la base 1. Cette assiette est percée en son centre d'un orifice 12 traversé par une tige 15 solidaire de la coupelle 5, cette tige 15 et cet orifice 12 constituant un moyen de guidage de la coupelle 5.

Dans la zone située entre cette assiette percée et la base 1 de la pièce, un piston 17 solidaire de la tige 15, donc de la coupelle 5, détermine une chambre étanche 20 entre la base 1 et le piston 17 grâce à une membrane déroulante 22 dont le bord périphérique est sert entre l'assiette et la base pour assurer l'étanchéité. Un conduit 25 met en communication cette chambre étanche 20 avec la chambre de commande du correcteur de freinage à commande fluidique (non représenté sur les Figures).

L'assiette est pourvue, à sa périphérie, d'un joint 30 coopérant avec la paroi interne de la coupelle, dans une partie verticale de celle-ci, pour assurer l'étanchéité de la pièce d'appui.

Dans le mode de réalisation illustré Figure 2, le moyen de guidage 10 est constitué par un élément cylindrique coaxial. La partie intérieure de la coupelle 5 est pourvue d'une pièce sensiblement annulaire 14 coopérant avec l'élément cylindrique pour assurer le guidage requis. La membrane déroulante 22 assure l'étanchéité de la chambre de pression 20, ses deux bords périphériques concentriques étant respectivement prisonniers entre la base 1 et l'élément cylindrique, et entre la pièce annulaire 14 et la coupelle 5.

Avec ces deux modes de réalisation décrits, on obtient une pièce d'appui formant capteur de pression d'une extrême simplicité, fiabilité et d'un prix très raisonnable.

## Revendications

1. Pièce d'appui pour ressort de suspension (3) pour véhicule automobile, faisant capteur de pression pour un correcteur de freinage à commande fluidique, la dite pièce comportant une base (1) solidaire du dit véhicule, et une coupelle (5) d'appui du dit ressort (3) montée mobile à coulissement étanche sur la dite base (1) à l'encontre de la pression régnant dans une chambre étanche coaxiale (20) au dit ressort (3), ménagée entre la base (1) et une partie solidaire de la dite coupelle, cette chambre (20) communiquant avec une chambre de commande du dit correcteur extérieure à la dite pièce d'appui, et un moyen de guidage (10) de la dite coupelle par rapport à la dite base étant disposé axialement au centre de la pièce, caractérisée en ce que le dit moyen de guidage comprend une tige coaxiale (15) solidaire de la dite coupelle (5) et portant un piston (17) déterminant avec la dite base la dite chambre étanche (20), la dite coupelle (5) étant soumise à la charge totale du dit ressort (3).

2. Pièce d'appui selon la revendication 1, caractérisée en ce que le dit élément de guidage comprend en outre une pièce en forme d'assiette retournée solidaire de la base (1) percée en son centre d'un orifice (12) traversé par la dite tige (15).

3. Pièce d'appui pour ressort de suspension (3) pour véhicule automobile, faisant capteur de pression pour un correcteur de freinage à commande fluidique, la dite pièce comportant une base (1) solidaire du dit véhicule, et une coupelle (5) d'appui du dit ressort (3) montée mobile à coulissement étanche sur la dite base (1) à l'encontre de la pression régnant dans une chambre étanche coaxiale (20) au dit ressort (3), ménagée entre la base (1) et une partie solidaire de la dite coupelle, cette chambre (20) communiquant avec une chambre de commande du dit correcteur extérieure à la dite pièce d'appui, et un moyen de guidage (10) de la dite coupelle par rapport à la dite base étant disposé axialement au centre de la pièce, caractérisée en ce que le dit moyen de guidage (10) comprend une partie cylindrique solidaire de la dite base (1) faisant saillie coaxialement de la dite base pour coopérer avec la paroi interne (14) de la dite coupelle (5) déterminant avec la dite base la dite chambre étanche (20), la dite coupelle (5) étant soumise à la charge totale du dit ressort (3).

4. Pièce d'appui selon la revendication 3, caractérisée en ce qu'un conduit (25) traverse le dit moyen de guidage (10) pour mettre en communication les dites chambres.

5. Pièce d'appui selon l'une quelconque des revendications précédentes, caractérisée en ce qu'une membrane déroulante (22) assure l'étanchéité de la dite chambre (20).

## Claims

1. Supporting component for a suspension spring (3) for a motor vehicle, forming a pressure sensor for a fluid-controlled brake regulator, the said component comprising a base (1) integral with the said vehicle, and a cap (5) for supporting the said spring (3), which cap (5) is sealingly slidably mounted on the said base (1) counter to the pressure prevailing in a sealed chamber (20) coaxial with the said spring (3) and formed between the base (1) and a part integral with the said cap, this chamber (20) communicating with a chamber, outside the said supporting component, for controlling the said regulator, and a means (10) for guiding the said cap relative to the said base being arranged axially at the centre of the component, characterized in that the said guiding means comprises a coaxial rod (15) which is integral with the said cap (5) and carries a piston (17) determining, with the said base, the said sealed chamber (20), the said cap (5) being subjected to the total load of the said spring (3).

2. Supporting component according to Claim 1, characterized in that the said guiding member also comprises a component in the form of an upturned plate integral with the base (1) and pierced at its centre with an orifice (12) through which the said rod (15) passes.

3. Supporting component for a suspension spring (3) for a motor vehicle, forming a pressure sensor for a fluid-controlled brake regulator, the said component comprising a base (1) integral with the said vehicle, and a cap (5) for supporting the said spring (3), which cap (5) is sealingly slidably mounted on the said base (1) counter to the pressure prevailing in a sealed chamber (20) coaxial with the said spring (3) and formed between the base (1) and a part integral with the said cap, this chamber (20) communicating with a chamber, outside the said supporting component, for controlling the said regulator, and a means (10) for guiding the said cap relative to the said base being arranged axially at the centre of the component, characterized in that the said guiding means (10) comprises a cylindrical part integral with the said base (1) and projecting coaxially from the said base so as to cooperate with the inner wall (14) of the said cap (5) determining, with the said base, the said sealed chamber (20), the said cap (5) being subjected to the total load of the said spring (3).

4. Supporting component according to Claim 3, characterized in that a channel (25) passes through the said guiding means (10) so as to put the said chambers in communication.

5. Supporting component according to any one of the preceding claims, characterized in that a displaceable membrane (22) ensures sealing of the said chamber (20).

## Patentansprüche

1. Abstützteil für Radaufhängungsfeder (3) für Kraftfahrzeuge, das einen Druckmeßfühler für einen Bremskraftregler mit Fluidsteuerung bildet, wobei das Teil versehen ist mit einer mit dem Fahrzeug verbundenen Grundplatte (1) und einem Federteller (5) zum Abstützen der genannten Feder (3), der an der Grundplatte (1) beweglich so angebracht ist, daß er auf dichte Weise entgegen dem in einer zur Feder (3) koaxialen, dichten Kammer (20) herrschenden Druck verschiebbar ist, wobei die Kammer (20) zwischen der Grundplatte (1) und einem mit dem Federteller verbundenen Abschnitt vorgesehen ist und mit einer Steuerkammer des außerhalb des Abstützteils befindlichen Reglers verbunden ist, wobei ein Führungsmittel (10) zum Führen des Federtellers relativ zu der Grundplatte in axialer Richtung in der Mitte des Teils angeordnet ist, dadurch gekennzeichnet, daß das Führungsmittel einen koaxialen Stift (15) aufweist, der mit dem Federteller (5) verbunden ist und einen Kolben (17) trägt, der mit der Grundplatte die dichte Kammer (20) bildet, wobei der Federteller (5) der gesamten Last der Feder (3) ausgesetzt ist.

2. Abstützteil gemäß Anspruch 1, dadurch gekennzeichnet, daß das Führungselement außerdem ein Teil in Form eines umgedrehten Tellers aufweist, der mit der Grundplatte (1) verbunden ist und in seinem Zentrum eine Öffnung (12) aufweist, durch die der Stift (15) verläuft.

3. Abstützteil für Radaufhängungsfeder (3) für Kraftfahrzeuge, das einen Druckmeßfühler für einen Bremskraftregler mit Fluidsteuerung bildet, wobei das Teil versehen ist mit einer mit dem Fahrzeug verbundenen Grundplatte (1) und einem Federteller (5) zur Abstützung der Feder (3), der an der Grundplatte (1) beweglich so angebracht ist, daß er auf dichte Weise und entgegen dem in einer zur Feder (3) koaxialen, dichten Kammer (20) herrschenden Druck verschiebbar ist, wobei die Kammer (20) zwischen der Grundplatte (1) und einem mit dem Federteller verbundenen Teil vorgesehen ist und mit einer Steuerkammer des Reglers außerhalb des Abstützteils verbunden ist, wobei ein Führungsmittel (10) zum Führen des Federtellers relativ zu der Grundplatte in axialer Richtung in der Mitte des Teils angeordnet ist, dadurch gekennzeichnet, daß das Führungsmittel (10) einen mit der Grundplatte (1) verbundenen zylindrischen Abschnitt aufweist, der koaxial von der Grundplatte vorsteht, um mit der Innenwand (14) des Federtellers (5) zusammenzuwirken, der zusammen mit der Grundplatte die dichte Kammer (20) bildet, wobei der Federteller (5) der gesamten Last der Feder (3) ausgesetzt ist.

4. Abstützteil gemäß Anspruch 3, dadurch gekennzeichnet, daß durch das Führungsmittel (10) eine Leitung (25) verläuft, um die Kammern miteinander zu verbinden.

5. Abstützteil gemäß einem der vorangehenden Ansprüche, dadurch gekennzeichnet, daß eine Abroll-Membran (22) die Dichtigkeit der Kammer (20) gewährleistet.
